# EUROPÄISCHE PATENTSCHRIFT

(11) **EP 3 660 987 B1**
(45) Veröffentlichungstag und Bekanntmachung des Hinweises auf die Patenterteilung: **04.01.2023**
(21) Anmeldenummer: 19208855.7
(22) Anmeldetag: 13.11.2019
(51) Int. Cl.: H01S 3/17, H01S 3/06, H01S 3/04, H01S 3/094, H01S 3/16

(54) **LASERVORRICHTUNG**
LASER DEVICE
DISPOSITIF LASER

(30) Priorität: 29.11.2018 DE 102018130390
(43) Veröffentlichungstag der Anmeldung: 03.06.2020
(73) Patentinhaber: SCHOTT AG, 55122 Mainz (DE)
(72) Erfinder: APITZ, Dirk, 1012 Lausanne (CH)
(74) Vertreter: Blumbach · Zinngrebe Patentanwälte PartG mbB

(56) Entgegenhaltungen:
- EP-A1- 1 978 611
- DE-A1- 10 355 216
- JP-A- H03 145 776
- US-A1- 2010 113 245

## Beschreibung

### Gebiet der Erfindung

Die Erfindung bezieht sich auf eine Laservorrichtung.

### Hintergrund der Erfindung

Eine Laservorrichtung besteht grundsätzlich aus drei Bestandteilen, einem aktiven Medium beziehungsweise einem laseraktiven Material, einer Anregungsquelle und einem Resonator.

Die Druckschrift JP H03 145776 A betrifft ein plattenförmiges Lasermedium, bei dem sich Laserresonanzlicht, das abwechselnd an zwei gegenüberliegenden Oberflächen reflektiert wird, zickzackförmig ausbreitet, wobei das Lasermedium aus Laserglas, das mit 8,7 Gew.-% Nd-Ionen als laseraktives Material dotiert ist, an beiden gegenüberliegenden Flächen daran schmelzverschweißte oder verklebte Schutzelemente aus Silikatglas, wie Borosilikatglas, aufweist.

Die Druckschrift EP 1 978 611 A1 beansprucht eine Mikrolaseranordnung mit einem monolithischen Körper, der eine Schicht eines optisch gepumpten Verstärkungsmediums, eine Schicht eines sättigbaren Absorbers, einen ersten und einen zweiten Reflektor, die so angeordnet sind, dass sie das Verstärkungsmedium und den sättigbaren Absorber einschließen, um einen Resonanzhohlraum mit einer optischen Achse zu bilden, zumindest einen optisch transparenten Wärmeverteiler auf der optischen Achse außerhalb des Resonanzhohlraums und einen optischen Pumpstrahl mit einer Wellenlänge, die durch das Verstärkungsmedium absorbiert wird und zum Längspumpen des Resonators reicht, enthält.

Im aktiven Medium entstehen durch den optischen Übergang angeregter Atome oder Moleküle in einen energetisch günstigeren Zustand Photonen. Zentrale Bedingung für ein laseraktives Material ist, dass sich eine Besetzungsinversion herstellen lässt. Das bedeutet, dass der obere Zustand des optischen Übergangs mit einer höheren Wahrscheinlichkeit besetzt ist als der untere Zustand. Ein solches aktives Medium beziehungsweise laseraktives Material muss mindestens über drei Niveaus verfügen und kann gasförmig, wie zum Beispiel Kohlendioxid, flüssig, wie zum Beispiel Farbstofflösungen, oder fest, wie zum Beispiel Kristall oder Glas, sein.

Das laseraktive Material kann mit Fremdionen dotiert sein, die das eigentliche aktive Medium von Festkörperlasern sind. Die für das Lasern genutzten Elektronenniveaus dieser (Fremd-)Ionen liegen innerhalb des d-Orbitals, wie zum Beispiel bei Titan- oder Chromionen, beziehungsweise f-Orbitals, wie zum Beispiel bei Neodym-, Erbium- oder Ytterbiumionen. Diese Orbitale sind nicht an chemischen Bindungen beteiligt. Das Trägermaterial, meist ein Glas oder (Ein-)Kristall, hat daher nur einen geringen Einfluss auf die Lasereigenschaften der Ionen. Um im aktiven Medium eine Energieaufnahme zu erreichen, müssen Elektronen auf ein höheres Energieniveau gehoben werden. Dieser Vorgang heißt Pumpen.

Um eine Besetzungsinversion herbeizuführen, muss in das laseraktive Material Energie hineingepumpt werden. Damit dieser Pumpprozess nicht mit der stimulierten Emission konkurriert, muss dieser auf einem anderen quantenmechanischen Übergang basieren. Das Pumpen kann optisch erfolgen, beispielsweise durch Einstrahlung von Licht, oder elektrisch, zum Beispiel mittels Gasentladung oder mit elektrischem Strom bei Laserdioden, um die Atome oder Moleküle des Lasermediums in angeregte Zustände zu bringen. Um einen praktischen Laserprozess in Gang zu bringen, muss die Energie im Lasermedium solange gespeichert bleiben bis sie durch induzierte, beziehungsweise stimulierte Emission freigegeben wird und die beteiligten Elektronen wieder auf ein niedrigeres Energieniveau zurückfallen. Damit eine notwendige sogenannte Besetzungsinversion effizient erzeugt werden kann, bei der sich auf dem höheren der beiden beteiligten Energieniveaus mehr Elektronen befinden als auf dem unteren, werden in der Regel Materialien und Pumpwellenlängen genutzt, so dass das obere der beiden beteiligten Niveaus ein sogenanntes metastabiles Niveau ist, die Elektronen in ein noch höheres Niveau gepumpt werden, spontan auf das metastabile herunterfallen und dieses füllen und nach dem Laserprozess vom unteren beteiligten Niveau möglichst schnell auf ein noch tiefer liegendes Grundniveau fallen. Um also effizient eine Besetzungsinversion zu erreichen, sind meist weitere Energieniveaus und weitere Übergänge notwendig, bei denen Energie frei wird, die nicht für den Laserprozess nutzbar sind. In keinem Fall kann ein Pump- und nachfolgernder Laserprozess somit eine Effizienz von 100% erreichen und ein Großteil der ungenutzten Energie wird, z. B. durch Phononen in Form von Wärme im Lasermaterial frei. Das Lasermaterial erwärmt sich. Solch eine Erwärmung kann direkt die Effizienz des Laserprozesses verkleinern, weil sich bei einer anderen Temperatur die Elektronen in einem anderen energetischen Gleichgewicht befinden. Großen Einfluss können aber auch sogenannte thermische Linsen haben. Dabei erwärmt sich eine optische Komponente nicht homogen, und aufgrund von thermischer Wärmeausdehnung beziehungsweise der Temperaturabhängigkeit des Brechungsindexes bildet sich eine zusätzliche, optisch relevante Linse aus, welche die Strahleigenschaften des Lasers unvorteilhaft verändert.

Ein Resonator besteht im einfachsten Fall aus zwei parallelen Spiegeln, zwischen welchen sich das laseraktive Material befindet. Photonen, deren Propagation senkrecht zu den Spiegeln verläuft, verbleiben im Resonator und können daher die Emission weiterer Photonen im aktiven Medium auslösen beziehungsweise stimulieren. Ein auf diese Weise entstehendes Photon entspricht in allen Quantenzahlen dem auslösenden Photon. Photonen, die den Resonator verlassen, stimulieren dementsprechend keine Emissionen. Diese Selektion des Resonators führt zur schmalbandigen Emission beziehungsweise der hohen Kohärenzlänge von Laserstrahlung.

Bei Lasersystemen, insbesondere mit einem festen laseraktiven Material, entsteht im Festkörper häufig Wärme, die abgeführt werden muss. Flüssigkeiten, die Wärme abführen, wie zum Beispiel Wasser, lassen sich jedoch gerade in kompakten, kleinen, eventuell sogar mobilen Lasersystemen schlecht integrieren. Eine metallische Wärmesenke lässt sich nur an Seitenflächen anbringen und ist für Scheibenlaser in der Regel nicht besonders effizient.

Außerdem sind einige laseraktive Materialien hygroskopisch und wasserlöslich, so dass ihre Oberfläche in Luftfeuchtigkeit oder in Wasser schnell degradiert und oft speziell geschützt werden muss. Ein Schutz, der gegen klimatische Einflüsse abschirmt, würde die Lebensdauer von solchen Lasersystemen deutlich steigern beziehungsweise Schutzvorkehrungen und die Reinigung vor und während der Montage vereinfachen.

Auch die chemische Beständigkeit von polierten Glasoberflächen hängt von der Zusammensetzung des Glases ab.

Die Klima-Resistenz beschreibt das Verhalten von Gläsern bei hoher relativer Luftfeuchtigkeit und hohen Temperaturen. Bei empfindlichen Gläsern kann an der Oberfläche eine fleckige Trübung auftreten, die im Allgemeinen nicht durch Abwischen entfernt werden kann.

Phosphatglas hat eine geringe Wärmeleitfähigkeit, einen großen

Wärmeausdehnungskoeffizienten und eine geringe Bruchfestigkeit, ist hygroskopisch, wasserlöslich und klimatisch nicht stabil. Bei Laseranwendungen mit Phosphatglas, wie beispielsweise LG750, LG760, LG770, APG1, BLG760, LG940, LG950, LG960 (erhältlich durch SCHOTT AG), sind dies negative Eigenschaften.

### Generelle Beschreibung der Erfindung

Der Erfindung liegt daher die Aufgabe zugrunde, eine Laservorrichtung bereitzustellen, die für ein laseraktives Material in Form eines Laserglases, insbesondere ein Phosphatglas, eine verbesserte Wärmeabfuhr bereitstellt. In bevorzugter Ausgestaltung soll das Lasermedium eine verbesserte chemische Beständigkeit, insbesondere eine verbesserte Klima-Resistenz beziehungsweise Wasserbeständigkeit, haben, verglichen mit einem Laserglas auf Phosphatbasis.

Die Aufgabe wird durch den Gegenstand des unabhängigen Anspruchs gelöst. Die abhängigen Ansprüche beinhalten Ausgestaltungen und Weiterentwicklungen der Erfindung.

Dazu weist die Laservorrichtung ein Element aus laseraktivem Material auf, welches unter Anregung mit Pumplicht Laserlicht abgibt, wobei das laseraktive Material ein Glas ist, und wobei zumindest ein Verkleidungs-Element mit dem Element aus laseraktiven Material verbunden ist, so dass ein Wärmeaustausch durch Wärmeleitung zwischen dem Verkleidungs-Element und dem Element aus laseraktivem Material ermöglicht wird, und wobei sich die Materialien von dem Verkleidungs-Element und dem Element aus laseraktiven Material derart unterscheiden, dass der Absorptionskoeffizient für das Pumplicht beim Verkleidungs-Element niedriger ist als der entsprechende Absorptionskoeffizient des Elements aus laseraktivem Material, und wobei die Laservorrichtung so ausgebildet ist, dass das Pumplicht durch das Verkleidungs-Element hindurch in das Element aus laseraktivem Material geleitet wird und/oder dass das Pumplicht durch das Element aus laseraktivem Material hindurch in das Verkleidungs-Element geleitet wird, und wobei das Verkleidungs-Element ein Phosphatkronglas, ein Phosphatschwerkronglas oder ein Borosilikatkronglas aufweist.

Damit ermöglicht die Laservorrichtung gleichzeitig auch eine ungestörte Laserlichtführung.

In einer bevorzugten Ausführung kann das Element aus laseraktivem Material plan-parallel poliert sein, wobei sowohl Pump- als auch Laserlicht durch beide polierten Oberflächen tritt, und wobei an beiden polierten Grenzflächen jeweils ein ebenfalls plan-parallel poliertes Verkleidungs-Element angebracht ist.

In einer anderen bevorzugten Ausführung kann das Element aus laseraktivem Material plan-parallel poliert sein, wobei eine der beiden Oberflächen verspiegelt und auf eine Wärmesenke aufgebracht ist. Dabei tritt sowohl Pump- als auch Laserlicht durch die andere polierte Oberfläche und wird an jeweils der verspiegelten Oberfläche reflektiert. An dieser zweiten polierten Grenzfläche kann ein ebenfalls plan-parallel poliertes Verkleidungs-Element angebracht sein. Dabei kann die Wärmesenke entweder aus einem sehr guten wärmeleitenden Material, z. B. einem Metall, insbesondere Kupfer, bestehen und passiv kühlen oder aber die Wärmesenke kann aktiv, z. B. mit Wasser oder mittels Perltier-Elementen, gekühlt werden.

Um als Wärmesenke oder als Verbindung zu einer seitlich angebrachten Wärmesenke zu wirken, hat das Verkleidungs-Element vorteilhafterweise eine höhere Wärmeleitfähigkeit als Luft oder als ein Schutzgas. Somit kann das zumindest eine Verkleidungs-Element die Wärme vom Element aus laseraktivem Material wegführen.

Das Verkleidungs-Element ist wärmetechnisch von Vorteil, wenn es eine zumindest ähnliche oder bevorzugt eine höhere Wärmeleitfähigkeit hat als das Element aus laseraktivem Material.

Für eine optimale Verbindung des zumindest einen Verkleidungs-Elements mit dem Element aus laseraktivem Material sind die thermischen Ausdehnungskoeffizienten der Materialien des Verkleidungs-Elements und des Elements aus laseraktivem Material, also des Laserglases, vorteilhafterweise ähnlich, bevorzugt beträgt der Unterschied weniger als 20%, besonders bevorzugt weniger als 10%.

Um die Transparenz für das Laserlicht zu gewährleisten, liegt vorzugsweise ein ähnlicher Brechungsindex vor, das heißt der Unterschied der Brechungsindizes der Materialien von dem Verkleidungs-Element und dem Element aus laseraktivem Material ist bevorzugt kleiner als 0,1, besonders bevorzugt kleiner als 0,05 und ganz besonders bevorzugt kleiner als 0,002.

Das Element aus laseraktivem Material besteht vorzugsweise aus Phosphatglas, also aus Glas auf Phosphatbasis.

Als Lasergläser auf Phosphatbasis für Hochleistungsanwendungen wurden z.B. die Glasarten LG750, LG760 und LG770 (erhältlich bei SCHOTT AG) entwickelt, um die Anforderungen von Hochenergie-Festkörperlasersystemen zu erfüllen. Alle drei Glasarten verfügen über einen großen Querschnitt und einen niedrigen nichtlinearen Brechungsindex. Alle sind frei von metallischen Platinpartikeln und anderen Einschlüssen, welche eine Beschädigung des Lasers verursachen könnten.

APG-1 (erhältlich bei SCHOTT AG) ist ein Phosphatglas für höhere Leistung und Anwendungen mit ultrakurzen Impulsen mit verbesserten thermisch-mechanischen Eigenschaften, die für Anwendungen mit hoher Durchschnittsleistung erwünscht sind. Die umfassende Emissionsbandbreite dieser Materialien wird in Lasersystemen mit Impulsen im Femtosekundenbereich verwendet. Der geringere Querschnitt und die lange Lebensdauer bei niedriger Emissionskonzentration machen dieses Glas besonders für Anwendungen interessant, die durch verstärkte stimulierte Emissionen eingeschränkt beziehungsweise für eine Anregung durch Diodenlaser vorgesehen sind.

APG-760 (erhältlich bei SCHOTT AG) ist ein Phosphat-Laserglas für Hochleistungsanwendungen bei 1 Mikrometer mit verbesserten thermisch-mechanischen Eigenschaften. Es wird zur Verwendung als aktives Material in Lasersystemen mit hohen Wiederholungsraten empfohlen.

In einer bevorzugten Ausgestaltung ist das Element aus laseraktivem Material mit Ionen einer oder mehreren der Elemente Erbium, Ytterbium, Neodym, Chrom, Cer und/oder Titan dotiert. Diese Fremdionen sind das eigentliche aktive Medium des Festkörperlasers.

LG940, LG950 und LG960 (erhältlich SCHOTT AG) sind "augensichere" Phosphat-Lasergläser für 1,5 Mikrometer Emission. Diese Erbium- und Ytterbium-Ionen-dotierten Phosphat-Gläser dienen zur Verwendung in Blitzlampen- oder Dioden-gepumpten Lasersystemen. Sie verfügen über sehr niedrige Brechungsindizes, gute thermische Eigenschaften und einen sehr hohen Emissionsquerschnitt. Typische Anwendungen sind Laserentfernungsmessungen und medizinische Laser.

LG940 ist ein Erbium-Ytterbium-Chrom-Cer-dotiertes Phosphat-Laserglas.

LG950 ist ein mit Erbium- und Ytterbiumionen dotiertes Phosphat-Laserglas.

Phosphatgläser bieten im Allgemeinen eine höhere Löslichkeit von Seltenerddotierstoffen, so dass die Menge an aktiven Ionen signifikant erhöht werden kann.

Geeignete Grundgläser sind Phosphat- oder Fluorphosphatgläser und weisen vorzugsweise einen Gehalt an P₂O₅ von mindestens 50 Gew.-%, weiter bevorzugt von mindestens 55 Gew.-%, gemäß einiger Ausführungsformen sogar höchstens 80 Gew.-% oder 85 Gew.-% auf. Weiterhin kann in den Gläsern Al₂O₃ vorzugsweise in einem Gehalt von mindestens 1 Gew.-%, weiter bevorzugt mindestens 2 Gew.-% und/oder vorzugsweise höchstens 20 Gew.-% enthalten sein. Als weitere Komponenten können die Phosphatgläser Fluor in einem Gehalt von vorzugsweise größer 0 bis 30 Gew.-%, eines oder mehrere Oxide der Alkalimetalle (Li₂O, Na₂O, K₂O, in Summe vorzugsweise 0 bis 20 Gew.-%), Erdalkalimetalle (MgO, CaO, BaO, SrO, in Summe vorzugsweise 0 bis 40 Gew.-%), und/oder Oxide der Elemente Si, B, Zn, La, Gd, Nb, Y, Yb, Bi, Ge, und/oder Pb enthalten sein. Solche Gläser sind beispielsweise in den Dokumenten US 2017/0217828, US 5526369, US 5032315, US 5173456, US 4929387, EP 1 714 948 A2, DE 10 2011 056 873, DE 10 2012 210 552 und DE 10 2017 207 253 beschrieben.

Für die vorliegende Erfindung geeignete Grundgläser weisen beispielsweise die folgende Zusammensetzung in Gew.-% auf:

| Gew.-% | von | bis |
|---|---|---|
| P₂O₅ | 25 | 75 |
| Al₂O₃ | 0,5 | 15 |
| MgO | 0 | 10 |
| CaO | 0 | 16 |
| BaO | 0 | 30 |
| SrO | 0 | 16 |
| ZnO | 0 | 10 |
| Li₂O | 0 | 13 |
| Na₂O | 0 | 10 |
| K₂O | 0 | 11 |
| ∑ RO (R = Mg, Ca, Sr, Ba) | >0 | 40 |
| ∑ R₂O (R = Li, Na, K) | >0 | 20 |
| F/F₂ | 0 | 30 |

Lasergläser enthalten neben den Bestandteilen des vorstehend genannten Grundglases noch laseraktive Komponenten, z. B. Ytterbium-Ionen und/oder Erbium-Ionen (z.B. in den von der SCHOTT AG hergestellten Gläsern LG960, LG950 und LG940), Neodym-Ionen (z.B. Nd:YAG, SCHOTT Gläser APG1, APG760, LG680, LG750, LG760, LG770), Chrom-Ionen und/oder Cobalt-Ionen.

Damit in dem Verkleidungs-Element keine Wärme durch einen Laser- oder Absorptionsprozess entsteht, ist das Verkleidungs-Element vorzugsweise nicht mit Laserlicht-emittierenden Ionen oder Pumplicht-absorbierenden Ionen, wie Ionen der Elemente Erbium, Ytterbium, Neodym, Chrom, Cer und/oder Titan, dotiert oder enthält diese vorzugsweise nicht.

Das Verkleidungs-Element weist ein Phosphatkronglas oder ein Borosilikatkronglas auf. Diese Glastypen haben einen niedrigen Brechungsindex, d.h. einen Brechungsindex n_{d} von vorzugsweise kleiner als 1,55, vorzugweise kleiner als 1,54 und /oder größer als 1,45, vorzugsweise größer als 1,47.

N-BK7 (hergestellt von der SCHOTT AG) Borosilikatkronglas ist ein sehr reines, universelles optisches Glas, welches beispielsweise in US 7,163,904 beschrieben ist. Es gehört zu den gebräuchlichsten Gläsern, die zur Herstellung hochwertiger optischer Komponenten, insbesondere im sichtbaren Spektrum, verwendet werden. Das relativ harte Bor-Kronglas mit einem Brechungsindex von n_{d} 1,5168 enthält sehr wenige Einschlüsse und ist nahezu blasenfrei.

Ein häufiger technischer Grund für die Verwendung von N-BK 7 ist die hohe optische Güte. Die gleichmäßige Transmission sowie eine geringe Absorption im gesamten sichtbaren Wellenlängenbereich sind für viele optische Anwendungen eine Schlüsseleigenschaft. Aufgrund stabiler chemischer Eigenschaften und einer hohen Fleckenresistenz, ist eine spezielle Behandlung von N-BK7 vor dem Schleifen und Polieren nicht erforderlich.

Für eine besondere Klimabeständigkeit umfasst das Verkleidungs-Element gemäß einer Ausführungsform bevorzugt Fluor-Ionen. Insbesondere kann dabei das Verkleidungs-Element ein Fluorphosphatglas umfassen.

Zudem kann das Verkleidungs-Element vorteilhafterweise eine Beschichtung umfassen, insbesondere eine Anti-Reflexionsbeschichtung.

Auch das Element aus laseraktivem Material kann bevorzugt auf der Seite, die dem Verkleidungs-Element gegenüberliegt, eine Beschichtung umfassen, insbesondere eine Beschichtung, welche die entsprechende Seite zumindest teilweise für das Laserlicht oder das Pumplicht oder beide verspiegelt, d.h. das Licht im Wesentlichen vollständig reflektiert.

Ferner hat das Verkleidungs-Element, insbesondere dessen Glas und/oder dessen Beschichtung, wie zum Beispiel eine Anti-Reflexionsbeschichtung, vorzugsweise eine höhere Laserzerstörungsschwelle als das Element aus laseraktivem Material oder zumindest so hoch, dass es zu keiner Beschädigung während des Betriebes der Laserkomponente kommt. Wird die Komponente mit der richtigen Wahl der Polarisationsrichtung des Laserlichtes und unter dem Brewster-Winkel betrieben, dann ist eine Anti-Reflexionsbeschichtung nicht nötig.

Vorteilhafterweise ist das Verkleidungs-Element mit dem Element aus laseraktivem Material verbunden durch optisches Bonden, insbesondere durch einen Brechungsindex-angepassten Klebstoff, bevorzugt durch einen Zweikomponenten-Epoxy-Klebstoff, oder durch anodisches Bonden oder durch Ansprengen.

Das optische Bonden des Verkleidungs-Elements kann mittels verschiedener Verfahren erfolgen: Beispielsweise kann das Bonden durch einen Klebstoff geschehen, dessen Brechungsindex an die Oberfläche des Elements aus laseraktivem Material beziehungsweise dessen Glases angepasst wurde, wie zum Beispiel Silikon (Englisch "silicone") oder einen Zweikomponenten-Epoxy-Klebstoff. Nachteil eines solchen Verfahrens ist die vergleichsweise geringe Laserzerstörungsschwelle (Laser Induced Damage Threshold, LIDT) organischer Substanzen im Vergleich zu anorganischen Gläsern. Bei Anwendungen, die sehr hohe Pulsenergien bei sehr kurzen Pulsdauern vorsehen, kann es daher von Vorteil sein, einen direkten Bonding-Prozess zu wählen, wie z. B. direktes Ansprengen (optical oder molecular bonding) oder anodisches Bonden.

Die Kerneigenschaften von Silikon mit niedriger Leitfähigkeit und chemischer Reaktivität, thermischer Stabilität und der Fähigkeit, Wasser abzustoßen und wasserdichte Dichtungen zu bilden, machen es zu einer gebräuchlichen Lösung für das optische Bonden. Epoxidharz bildet bei der Verwendung als Strukturklebstoff eine festere Verbindung als Silikon und verhindert so die Bildung von Partikelrückständen.

Anodisches Bonden ist ein Verbindungsverfahren, bei dem durch Erwärmung und Anlegen einer äußeren Spannung eine lonenwanderung stattfindet, wobei sich die zu verbindenden Glasoberflächen anziehen. Die Anziehungskraft entgegengesetzter Elektroden nimmt bei Verringerung des Abstandes zu. So werden beide Oberflächen immer enger aneinander gezogen bis der Punkt erreicht wird, bei dem der Abstand so gering ist, dass die Oberflächenatome der Gläser chemische Verbindungen bilden, obwohl dafür die eigentliche Reaktionstemperatur noch nicht erreicht ist. Nach dem Abschalten der Spannung und dem Abkühlen sind beide Glasoberflächen nicht mehr voneinander trennbar.

Beim sogenannten Ansprengen ergibt sich eine direkte adhäsive Haftung der aufeinanderliegenden Oberflächen. Es kommen also insbesondere keine Klebstoffe oder Kunstharze zum Einsatz. Die molekulare Wechselwirkung zwischen den beiden Flächen erzeugt die Adhäsionskraft, die das Verkleidungs-Element auf dem Element aus laseraktivem Material befestigt.

Die direkte adhäsive Verbindung kann unter Vermittlung einer Flüssigkeit erfolgen. Hierzu eignen sich bei Gläsern insbesondere Wasser oder insbesondere wässrige Salzlösungen. Die Flüssigkeit auf einer oder beiden Oberflächen wird beim Ansprengen verdrängt und die Oberflächen haften auch hier direkt adhäsiv aneinander, wobei teilweise über verbleibende zwischengelagerte Moleküle der Flüssigkeit die Van-der-Waals-Kräfte, welche die beiden Teile verbinden, übertragen werden.

Auch kann ein umgekehrter vorübergehender Druckunterschied das Ansprengen unterstützen. Mit anderen Worten kann zum Ansprengen das Verkleidungs-Element durch einen gegenüber dem Umgebungsdruck eingestellten Unterdruck am Element aus laseraktivem Material an- und festgesaugt werden.

Alternativ oder zusätzlich kann das Ansprengen auch durch eine zeitweilige gegenpolige Aufladung beider Oberflächen und somit durch eine elektrostatische Anziehung der Oberflächen unterstützt oder bewirkt werden.

Ein nachfolgender Temper-Prozess (thermal annealing) kann weiterhin die Verbindung der beiden Komponenten nach Ansprengen oder anodischem Bonden verstärken.

Das Ansprengen als Verbindungsmethode von dem Verkleidungs-Element mit dem Element aus laseraktivem Material ist vorliegend bevorzugt.

Gemäß einer bevorzugten Ausführungsform der Erfindung liegen sowohl das laseraktive Material als auch das Verkleidungs-Material in Form von Körpern vor, welche zumindest in einem Bereich ihrer Flächen eine Rauigkeit RMS aufweisen, bestimmt als quadratischer Mittenrauwert, von maximal 8 nm, maximal 4 nm, bevorzugt von maximal 2 nm, besonders bevorzugt von maximal 1 nm und ganz besonders bevorzugt von maximal 0,5 nm. Insbesondere für Oberflächen, welche durch Bonden zusammengefügt werden, ist es vorteilhaft, eine geringe Oberflächenrauheit zu haben.

### Kurzbeschreibung der Zeichnungen

Die Erfindung wird nachfolgend anhand der beigeschlossenen Figuren genauer erläutert.

In den Figuren bezeichnen gleiche Bezugszeichen jeweils gleiche oder entsprechende Elemente. Es zeigen:
- Fig. 1: eine schematische Zeichnung einer erfindungsgemäßen Laservorrichtung mit zwei Verkleidungs-Elementen,
- Fig. 2: eine schematische Zeichnung einer erfindungsgemäßen Laservorrichtung mit einem Verkleidungs-Element,
- Fig. 3: eine schematische Zeichnung einer alternativen erfindungsgemäßen Laservorrichtung mit einem Verkleidungs-Element,
- Fig. 4: eine schematische Zeichnung einer erfindungsgemäßen Laservorrichtung mit einem Spiegel, einer metallischen Wärmesenke und einem Verkleidungs-Element,
- Fig. 5: eine schematische Zeichnung einer erfindungsgemäßen Laservorrichtung mit einem dichroischen Spiegel und zwei Verkleidungs-Elementen,
- Fig. 6: eine schematische Zeichnung einer alternativen erfindungsgemäßen Laservorrichtung mit einem dichroischen Spiegel und zwei Verkleidungs-Elementen,
- Fig. 7: eine schematische Zeichnung einer erfindungsgemäßen Laservorrichtung mit zwei dichroischen Spiegeln und zwei Verkleidungs-Elementen.

### Detaillierte Beschreibung der Erfindung

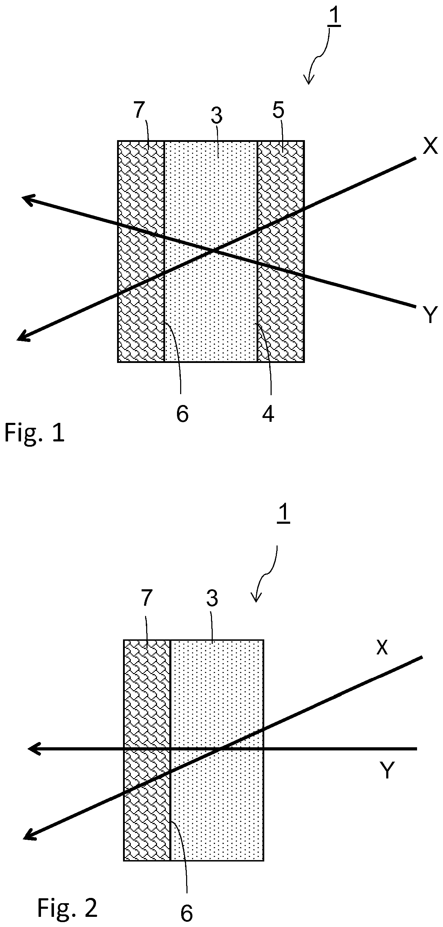

In den Figuren 1 bis 7 ist schematisch jeweils ein Ausführungsbeispiel einer erfindungsgemäßen Laservorrichtung 1 gezeigt. Die Laservorrichtung 1 umfasst jeweils ein Element 3 aus laseraktivem Material, eine nicht dargestellte Pumplichtquelle, die Pumplicht X abstrahlt, eine nicht dargestellte Laserlichtquelle, die Laserlicht Y abstrahlt, und einen nicht dargestellten Resonator.

Das Element 3 aus laseraktivem Material, vorzugsweise aus Glas, mehr bevorzugt aus Phosphatglas, besonders bevorzugt aus dotiertem Phosphatglas, gibt unter Anregung mit Pumplicht X Laserlicht Y ab.

In Figur 1 ist eine Laservorrichtung 1 gezeigt, bei dem das Element 3 aus laseraktivem Material auf der Pumplicht-Eintrittsseite 4 mit einem ersten Verkleidungs-Element 5 und auf der Laserlicht-Austrittsseite 6 des Elements 3 aus laseraktivem Material mit einem zweiten Verkleidungs-Glaselement 7 verbunden ist, so dass ein Wärmeaustausch durch Wärmeleitung zwischen den Verkleidungs-Elementen 5, 7 und dem Element 3 aus laseraktivem Material ermöglicht wird. Dabei wird insbesondere die im Element 3 aus laseraktivem Material entstehende Wärme über die Verkleidungs-Elemente 5 und 7 abgeführt.

Die Laservorrichtung 1 in Figur 1 ist so ausgebildet, dass das Pumplicht X durch das erste Verkleidungs-Element 5 hindurch in das Element 3 aus laseraktivem Material leitbar ist und dass das Pumplicht X durch das Element 3 aus laseraktivem Material hindurch in das zweite Verkleidungs-Element 7 leitbar ist.

In den Ausführungsbeispielen sind die Verkleidungs-Elemente 5, 7 bevorzugt aus Glas. Die Gläser von den Verkleidungs-Elementen 5, 7 und dem Element 3 aus laseraktivem Material unterscheiden sich dabei derart, dass der Absorptionskoeffizient für das Pumplicht X beim Verkleidungs-Element 5 beziehungsweise 7 niedriger ist, als der entsprechende Absorptionskoeffizient des Elements 3 aus laseraktivem Material. Damit ermöglicht die Laservorrichtung 1 eine ungestörte Führung des Laserlichts Y.

Das Element 3 aus laseraktivem Material hat gemäß einer Ausführungsform die Form einer Scheibe. Die für das Entstehen des Laserlichts Y notwendige Energie kann durch mehrfachen Durchgang des Pumplichts X durch die Laserscheibe, üblicherweise mit einer Dicke zwischen 0,5 mm und 500 mm, bevorzugt zwischen 1 mm und 30 mm, besonders bevorzugt zwischen 1,5 und 15 mm, erzeugt werden.

Um als Wärmesenke zu wirken, hat das Verkleidungs-Element 5 beziehungsweise 7 vorteilhafterweise eine höhere Wärmeleitfähigkeit als Luft oder als ein Schutzgas. Dadurch wird die Wärme vom Element 3 aus laseraktivem Material weggeführt.

Das Verkleidungs-Element 5 beziehungsweise 7 ist wärmetechnisch von besonderem Vorteil, wenn es eine zumindest ähnliche oder bevorzugt eine höhere Wärmefähigkeit hat als das Element 3 aus laseraktivem Material.

Für eine optimale Verbindung des Verkleidungs-Elements 5 beziehungsweise 7 mit dem Element 3 aus laseraktivem Material sind die thermischen Ausdehnungskoeffizienten der Gläser des Verkleidungs-Elements 5 beziehungsweise 7 und des Elements 3 aus laseraktivem Material, also des Laserglases, vorteilhafterweise ähnlich, bevorzugt beträgt der Unterschied weniger als 20%, besonders bevorzugt weniger als 10%.

Um die Transparenz für das Laserlicht Y zu gewährleisten, liegt vorzugsweise ein ähnlicher Brechungsindex vor, das heißt der Unterschied der Brechungsindizes der Gläser von dem Verkleidungs-Element 5 beziehungsweise 7 und dem Element 3 aus laseraktivem Material ist bevorzugt kleiner als 0,1, besonders bevorzugt kleiner als 0,05 und ganz besonders bevorzugt kleiner als 0,002.

Vorteilhafterweise ist das Verkleidungs-Element 5 beziehungsweise 7 mit dem Element aus laseraktivem Material verbunden durch optisches Bonden, insbesondere durch einen Brechungsindex-angepassten Klebstoff, bevorzugt durch einen Zweikomponenten-Epoxy-Klebstoff, oder durch anodisches Bonden oder durch Ansprengen.

Bezüglich der Wärmeleitfähigkeit, des thermischen Ausdehnungskoeffizienten und des Brechungsindex des oder der Verkleidungs-Elemente 5, 7 und des Elements 3 aus laseraktivem Material sowie deren Verbindung gelten auch für die Laservorrichtungen 1 der Figuren 2 bis 7 bevorzugt die gleichen Ausgestaltungen wie bei Figur 1.

Die Laservorrichtung 1 in Figur 2 ist so ausgebildet, dass das Pumplicht X durch das Element 3 aus laseraktivem Material hindurch in ein Verkleidungs-Element 7 leitbar ist, wobei das Element 3 aus laseraktivem Material auf dessen Laserlicht-Austrittsseite 6 mit dem Verkleidungs-Element 7 verbunden ist.

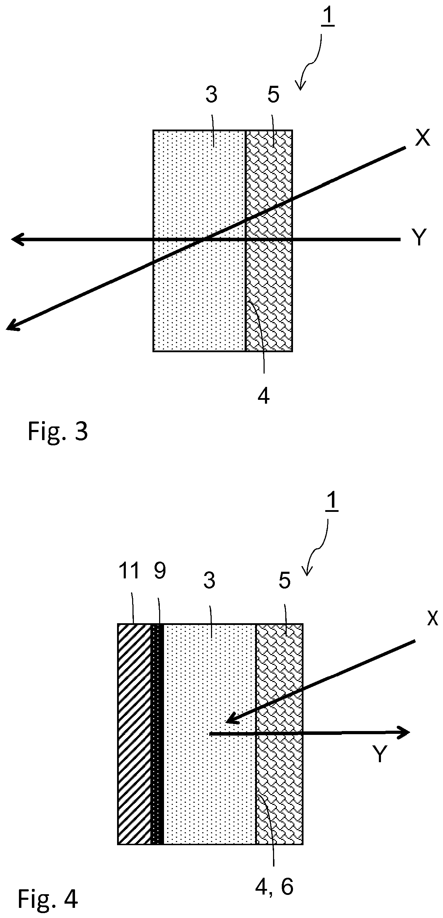

In Figur 3 ist ein alternatives Ausführungsbeispiel der erfindungsgemäßen Laservorrichtung 1 dargestellt, wobei ein Element 3 aus laseraktivem Material im Unterschied zu Figur 2 auf der Pumplicht-Eintrittsseite 4 des Elements 3 aus laseraktivem Material mit einem Verkleidungs-Element 5 verbunden ist. Die Laservorrichtung 1 in Figur 3 ist also so ausgebildet, dass das Pumplicht X durch das Verkleidungs-Element 5 hindurch in das Element 3 aus laseraktivem Material leitbar ist, wobei das Laserlicht Y auf der gegenüberliegenden Laserlicht-Austrittsseite 6 des Elements 3 aus laseraktivem Material austritt.

In Figur 4 ist ein weiteres Ausführungsbeispiel einer erfindungsgemäßen Laservorrichtung 1 gezeigt, wobei ein Element 3 aus laseraktivem Material auf einer der Pumplicht-Eintrittsseite 4 des Elements 3 aus laseraktivem Material gegenüberliegenden Seite direkt mit einem Spiegel 9 und einer an der verspiegelten Fläche angrenzenden zusätzlichen metallischen Wärmesenke 11 verbunden ist. Auf der Pumplicht-Eintrittsseite 4 des Elements 3 aus laseraktivem Material, die vorliegend wegen des Spiegels 9 gleichzeitig die Laserlicht-Austrittsseite 6 des Elements 3 aus laseraktivem Material darstellt, ist das Element 3 aus laseraktivem Material mit einem Verkleidungs-Element 5 verbunden.

Die Laservorrichtung 1 in Figur 4 ist also so ausgebildet, dass das Pumplicht X durch das Verkleidungs-Element 5 hindurch in das Element 3 aus laseraktivem Material leitbar ist und dass das Laserlicht Y abgelenkt durch den Spiegel 9 durch das Element 3 aus laseraktivem Material hindurch in und durch das Verkleidungs-Element 5 herausleitbar ist.

Die zusätzliche metallische Wärmesenke 11 ist ein räumlich begrenzter Bereich oder Körper, der die in ihm gespeicherte oder zugeführte thermische Energie an ein angrenzendes Medium ab-, beziehungsweise weitergibt.

Angrenzende Medien können feste Gegenstände, Flüssigkeiten oder Gase sein.

Bei einer Scheiben-Geometrie des Elements 3 aus laseraktivem Material ist die bessere Kühlung von Vorteil. Bei einer geringeren Scheibendicke als deren Durchmesser, erfolgt die Wärmeableitung nahezu ausschließlich über die Grundfläche der Scheibe. Somit ist ein Temperaturgradient nahezu ausschließlich senkrecht zur Scheibenoberfläche zu finden, nicht aber innerhalb der Scheibenebene. Dies führt zu einer Verringerung der im Betrieb entstehenden mechanischen Spannungen durch thermische Ausdehnung der Scheibe, welche sich in anderen Hochleistungs-Festkörperlasern negativ auf die Strahlqualität beziehungsweise Fokussierbarkeit auswirken kann.

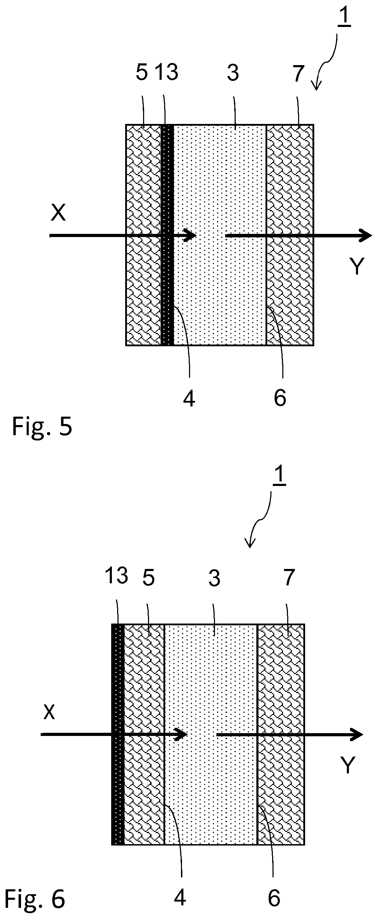

In Figur 5 ist ein Ausführungsbeispiel für eine erfindungsgemäße Laservorrichtung 1 gezeigt, wobei ein Element 3 aus laseraktivem Material auf der Pumplicht-Eintrittsseite 4 des Elements 3 aus laseraktivem Material direkt mit einem dichroischen Spiegel 13, der transparent für das Pumplicht X und reflektierend für das Laserlicht Y ist, verbunden ist, und an dem dichroischen Spiegel 13 angrenzend ein erstes Verkleidungs-Element 5 angeordnet ist. Ferner ist das Element 3 aus laseraktivem Material auf der Laserlicht-Austrittsseite 6 des Elements 3 aus laseraktivem Material mit einem zweiten Verkleidungs-Element 7 verbunden.

Die Laservorrichtung 1 in Figur 5 ist also so ausgebildet, dass das Pumplicht X durch das erste Verkleidungs-Glaselement 5 und den dichroischen Spiegel 13 hindurch in das Element 3 aus laseraktivem Material leitbar ist und dass das Laserlicht Y durch das Element 3 aus laseraktivem Material hindurch in das zweite Verkleidungs-Element 7 leitbar ist.

In Figur 6 ist ein Ausführungsbeispiel für eine erfindungsgemäße Laservorrichtung 1 gezeigt, wobei ein Element 3 aus laseraktivem Material auf der Pumplicht-Eintrittsseite 4 direkt mit einem ersten Verkleidungs-Element 5 und einem daran angrenzenden dichroischen Spiegel 13, der transparent für Pumplicht X und reflektierend für Laserlicht Y ist, verbunden ist und auf der Laserlicht-Austrittsseite 6 mit einem zweiten Verkleidungs-Element 7 verbunden ist.

Die Laservorrichtung 1 in Figur 6 ist also so ausgebildet, dass das Pumplicht X durch den dichroischen Spiegel 13 und das Verkleidungs-Element 5 hindurch in das Element 3 aus laseraktivem Material leitbar ist und dass das Laserlicht Y durch das Element 3 aus laseraktivem Material hindurch in das Verkleidungs-Element 7 leitbar ist.

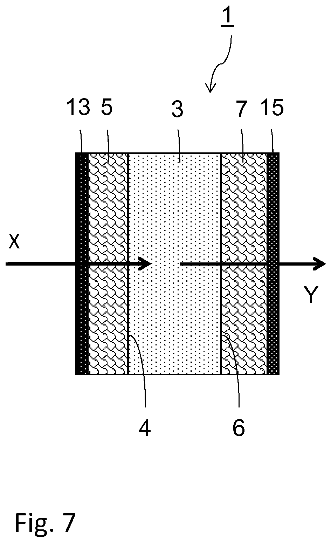

In Figur 7 ist ein Ausführungsbeispiel für eine erfindungsgemäße Laservorrichtung 1 gezeigt, wobei ein Element 3 aus laseraktivem Material auf der Pumplicht-Eintrittsseite 4 des Elements 3 aus laseraktivem Material direkt mit einem ersten Verkleidungs-Element 5 und einem daran angrenzenden dichroischen Spiegel 13, der transparent für Pumplicht X und reflektierend für Laserlicht Y ist, verbunden ist und auf der Laserlicht-Austrittsseite 6 des Elements 3 aus laseraktivem Material direkt mit einem zweiten Verkleidungs-Element 7 und einem daran angrenzenden dichroischen Spiegel 15, der transparent für Laserlicht Y und reflektierend für Pumplicht X ist, verbunden ist.

Die Laservorrichtung 1 in Figur 7 ist also so ausgebildet, dass das Pumplicht X durch den dichroischen Spiegel 13 und das Verkleidungs-Element 5 hindurch in das Element 3 aus laseraktivem Material leitbar ist und dass das Laserlicht Y durch das Element 3 aus laseraktivem Material hindurch in das Verkleidungs-Element 7 und den dichroischen Spiegel 15 leitbar ist.

Die erfindungsgemäßen Laservorrichtungen 1 haben bevorzugt eine verbesserte chemische Beständigkeit, insbesondere eine verbesserte Klima-Resistenz beziehungsweise Wasserbeständigkeit als ein alleiniges Laserglas auf Phosphatbasis.

Die Klima-Resistenz beschreibt das Verhalten von optischen Gläsern bei hoher relativer Luftfeuchtigkeit und Temperaturen zwischen 40°C und 50°C. Bei empfindlichen Gläsern kann an der Oberfläche eine fleckige Trübung auftreten, die im Allgemeinen nicht durch Abwischen entfernt werden kann.

Zur Prüfung der Gläser auf Klima-Resistenz wird ein Kurzzeitverfahren angewendet, bei dem polierte, unvergütete Glasplatten einer wasserdampfgesättigten Atmosphäre ausgesetzt werden, deren Temperatur stündlich zwischen 40°C und 50°C wechselt. Damit wird ein periodischer Wechsel von Feuchtekondensation auf der Glasoberfläche und anschließender Trocknung erzeugt. Nach einer Expositionszeit von 30 Stunden werden die Glasplatten der Klimakammer entnommen. Als Maß für die eingetretenen Oberflächenveränderungen in Form von fleckige Trübungen wird die Differenz ΔH zwischen der Transmissionstrübung (englisch: Haze) vor und nach Beanspruchung herangezogen. Die Messungen werden mit einem Kugel-Hazemeter durchgeführt. Die Klasseneinstufung erfolgt anhand der Transmissionstrübungszunahme ΔH nach 30-stündiger Beanspruchungszeit.

Die Einteilung optischer Gläser in Klima-Resistenzklassen (Climate Resistance, CR) CR 1 bis CR 4 ist in der nachfolgenden Tabelle 1 aufgeführt.

**Tabelle 1:**

| Klima-Resistenzklasse CR | 1 | 2 | 3 | 4 |
|---|---|---|---|---|
| ΔH | < 0,3% | ≥ 0,3% bis < 1% | ≥ 1% bis < 2% | ≥ 2% |

Gläser der Klima-Resistenzklasse CR 1 zeigen nach 30-stündiger Beanspruchung durch Klimawechsel keinen sichtbaren Angriff. Bei den üblichen Feuchtebedingungen bei der Bearbeitung und Lagerung von optischen Glasern der Klasse CR 1 ist ein Oberflächenangriff nicht zu erwarten. Die Bearbeitung und Lagerung der Gläser der Klasse CR 4 sollte dagegen mit besonderer Vorsicht erfolgen, da diese Gläser äußerst empfindlich gegenüber Klimaeinflüssen sind.

In der nachfolgenden Tabelle 2 sind einige Gläser des Elements 3 aus laseraktivem Material, das heißt Lasergläser, geeignete Gläser des beziehungsweise der Verkleidungs-Elemente 5, 7 aufgelistet sowie deren Klima-Resistenz-Klasse (Climate Resistance, CR), deren Wärmeleitfähigkeit, deren thermischer Ausdehnungskoeffizient und deren Brechungsindex bei ausgewählten Laserwellenlängen.

**Tabelle 2:**

| Glas | Laserwellenlänge [nm] | Klima-Resistenz-klasse CR | Wärmeleitfähigkeit (25°C) [W/mK] | Thermischer Ausdehungskoeffizient (-30/+70°C / 20-40°C) [10⁻⁷/°C) | Brechungsindex bei 1054 nm | Brechungsindex bei 1535 nm |
|---|---|---|---|---|---|---|
| LG940 | 1533 | 1 - 2 | 0,51 | 80,1 | | 1,522 |
| LG950 | 1534 | 4 | 0,63 | 108 | | 1,515 |
| LG760 | 1054 | 2 | 0,57 | 125 | 1,508 | |
| N-PK51 | | 1 | 0,65 | 124 | 1,520 | 1,517 |
| N-BK7 | | 1 | 1,114 | 71 | 1,507 | 1,501 |
| N-PSK3 | | 3 | 0,99 | 62 | 1,541 | 1,536 |

Die Gläser LG940 und LG950 sind "augensichere" Phosphat-Lasergläser für 1,5 Mikrometer Emission. Diese Erbium- und Ytterbium-dotierten Phosphat-Gläser dienen zur Verwendung in Blitzlampen- oder Dioden-gepumpten Lasersystemen. Sie verfügen über sehr niedrige Brechungsindizes, gute thermische Eigenschaften und einen sehr hohen Emissionsquerschnitt. Typische Anwendungen sind Laserentfernungsmessungen und medizinische Laser.

Das LG940 der SCHOTT AG ist ein Erbium-Ytterbium-Chrom-Cer-dotiertes Phosphat-Laserglas. Das LG950 der SCHOTT AG ist ein mit Erbium- und Ytterbiumionen dotiertes Phosphat-Laserglas.

Das Glas LG760 der SCHOTT AG ist ein Laserglas auf Phosphatbasis für Hochleistungsanwendungen, um die Anforderungen von Hochenergie-Festkörperlasersystemen zu erfüllen. Es verfügt über einen großen Querschnitt und einen niedrigen nichtlinearen Brechungsindex. Ferner ist es frei von metallischen Platinpartikeln und anderen Einschlüssen, welche eine Beschädigung des Lasers verursachen könnten.

Das Phosphatkronglas N-PK51 von SCHOTT AG ist ein Bariumphosphatglas, das Glas N-BK7 von SCHOTT AG ist ein Borosilikatkronglas und das Schwerphosphatkronglas N-PSK3 ist ebenfalls ein Bariumphosphatglas von SCHOTT AG.

Borosilikatkronglas hat einen besonders hohen Wärmeleitfähigkeitswert und eignet sich daher besonders gut als Verkleidungs-Element 5 beziehungsweise 7 für eine erfindungsgemäße Laservorrichtung 1.

So kann es durch die Verbindung mit einem Element 3 aus laseraktivem Material beispielsweise in Form eines beliebigen in der Tabelle 2 genannten Glases auf Phosphatbasis die beim Einsatz der Laservorrichtung 1 entstehende Wärme besonders gut von dem Element 3 aus Phosphat-Laserglas wegführen.

Ferner ist durch die ähnlichen Brechungsindizes der Verbindung aus Verkleidungs-Element 5 beziehungsweise 7 und dem Element 3 aus laseraktivem Material eine gewünschte Transparenz für das Laserlicht Y gewährleistet.

Durch die Klima-Resistenzklasse CR 1 des Borosilikatkronglases kann dieses Verkleidungs-Element 5 beziehungsweise 7 ein Element 3 aus laseraktivem Material mit höherer Klima-Resistenzklasse, wie zum Beispiel LG950 oder LG760, zusätzlich vor schädlichen Klimaeinflüssen besonders wirksam schützen.

Das Verkleidungs-Element 5 beziehungsweise 7 kann durchaus auch selbst aus Phosphatglas bestehen, solange es nicht aktiv dotiert ist, insbesondere mit Laserlicht-emittierenden Ionen oder Pumplicht-absorbierenden Ionen. Somit kommt insbesondere auch ein Phosphatkronglas, wie beispielsweise N-PK51, als Verkleidungs-Element 5 beziehungsweise 7 in Betracht, um die beim Einsatz der Laservorrichtung 1 entstehende Wärme besonders gut von einem Element 3 aus Phosphat-Laserglas, insbesondere einem Laserionen-dotierten Phosphatglas wie LG940 oder LG950, wegzuführen.

Das Verkleidungs-Element 5 beziehungsweise 7 aus Phosphatkronglas mit einer Klima-Resistenzklasse CR 1 fungiert auch als Schutz für die gegenüber Feuchtigkeit empfindlichen laseraktiven Phosphatgläser, wie LG940 oder LG950, des Elements 3.

So sind abhängig vom Einsatzgebiet vielfältige Kombinationen zwischen den in der Tabelle 2 genannten Gläsern als Element 3 aus laseraktivem Material und als Verkleidungs-Element 5 beziehungsweise 7 zur Wärmeableitung und gegebenenfalls zusätzlicher Klima-Resistenz möglich.

Für eine optimale Verbindung des zumindest einen Verkleidungs-Elements 5 beziehungsweise 7 mit dem Element 3 aus laseraktivem Material sind die thermischen Ausdehnungskoeffizienten der Gläser des Verkleidungs-Elements 5 beziehungsweise 7 und des Elements 3 aus laseraktivem Material, also des Laserglases, vorteilhafterweise ähnlich, bevorzugt beträgt der Unterschied weniger als 20%, besonders bevorzugt weniger als 10%. Diesbezüglich kommt beispielsweise eine Kombination des Borosilikatkronglases N-BK7 als Verkleidungs-Element 5 beziehungsweise 7 mit dem laseraktiven Phosphatglas LG940 als Element 3 in Betracht oder eine Verbindung des Phosphatkronglases N-PK51 als Verkleidungs-Element 5 beziehungsweise 7 mit einem Element 3 aus LG760 oder LG950.

### Bezugszeichenliste

- 1: Laservorrichtung
- 3: Element aus laseraktivem Material
- 4: Pumplicht-Eintrittsseite des Elements 3
- 5: (erstes) Verkleidungs-Element
- 6: Laserlicht-Austrittsseite des Elements 3
- 7: (zweites) Verkleidungs-Element
- 9: Spiegel
- 11: metallische Wärmesenke
- 13: dichroischer Spiegel, der transparent für das Pumplicht X und reflektierend für das Laserlicht Y ist
- 15: dichroischer Spiegel, der transparent für das Laserlicht Y und reflektierend für das Pumplicht X ist
- X: Pumplicht
- Y: Laserlicht

## Patentansprüche

1. Laservorrichtung (1) mit
- einem Element (3) aus laseraktivem Material, welches unter Anregung mit Pumplicht (X) Laserlicht (Y) abgibt, wobei das laseraktive Material ein Glas ist, und wobei
- zumindest ein Verkleidungs-Element (5, 7) mit dem Element (3) aus laseraktivem Material verbunden ist, so dass ein Wärmeaustausch durch Wärmeleitung zwischen dem Verkleidungs-Element (5, 7) und dem Element (3) aus laseraktivem Material ermöglicht wird, und wobei
- sich die Materialien von dem Verkleidungs-Element (5, 7) und dem Element (3) aus laseraktivem Material derart unterscheiden, dass der Absorptionskoeffizient für das Pumplicht (X) beim Verkleidungs-Element (5, 7) niedriger ist als der entsprechende Absorptionskoeffizient des Elements (3) aus laseraktivem Material, und wobei die Laservorrichtung (1) so ausgebildet ist, dass das Pumplicht (X) durch das Verkleidungs-Element (5) hindurch in das Element (3) aus laseraktivem Material geleitet wird und/oder dass das Pumplicht (X) durch das Element (3) aus laseraktivem Material hindurch in das Verkleidungs-Element (7) geleitet wird, **dadurch gekennzeichnet, dass** :
- das Verkleidungs-Element (5, 7) ein Phosphatkronglas, ein Phosphatschwerkronglas oder ein Borosilikatkronglas aufweist.

2. Laservorrichtung (1) nach Anspruch 1, wobei der Unterschied der Brechungsindizes der Materialien von dem Verkleidungs-Element (5, 7) und dem Element (3) aus laseraktivem Material kleiner als 0,1 ist, bevorzugt kleiner als 0,05 und besonders bevorzugt kleiner als 0,002 ist.

3. Laservorrichtung (1) nach einem der vorhergehenden Ansprüche, wobei das Verkleidungs-Element (5, 7) eine höhere Wärmeleitfähigkeit als Luft hat oder als ein Schutzgas.

4. Laservorrichtung (1) nach einem der vorhergehenden Ansprüche, wobei das Verkleidungs-Element (5, 7) eine höhere Wärmeleitfähigkeit hat als das Element (3) aus laseraktivem Material.

5. Laservorrichtung (1) nach einem der vorhergehenden Ansprüche, wobei das Element (3) aus laseraktivem Material aus Phosphatglas besteht.

6. Laservorrichtung (1) nach einem der vorhergehenden Ansprüche, wobei das Element (3) aus laseraktivem Material mit Ionen einer oder mehreren der Elemente Erbium, Ytterbium, Neodym, Chrom, Cer und/oder Titan dotiert ist.

7. Laservorrichtung (1) nach einem der vorhergehenden Ansprüche, wobei das Verkleidungs-Element (5, 7) nicht mit Laserlicht-emittierenden Ionen oder Pumplicht-absorbierenden Ionen dotiert ist oder diese enthält.

8. Laservorrichtung (1) nach einem der vorhergehenden Ansprüche, wobei das Verkleidungs-Element (5, 7) Fluor-Ionen umfasst, insbesondere, wobei das Verkleidungs-Element (5, 7) ein Fluor-Phosphatglas umfasst.

9. Laservorrichtung (1) nach einem der vorhergehenden Ansprüche, wobei das Verkleidungs-Element (5, 7) eine höhere Laserzerstörungsschwelle hat als das Element (3) aus laseraktivem Material.

10. Laservorrichtung (1) nach einem der vorhergehenden Ansprüche, wobei der Unterschied der thermischen Ausdehnungskoeffizienten der Materialien von dem Verkleidungs-Element (5, 7) und dem Element (3) aus laseraktivem Material weniger als 20% beträgt, bevorzugt weniger als 10%.

11. Laservorrichtung (1) nach einem der vorhergehenden Ansprüche, wobei das Verkleidungs-Element (5, 7) mit dem Element (3) aus laseraktivem Material verbunden ist durch Ansprengen oder durch optisches Bonden oder durch anodisches Bonden.

12. Laservorrichtung (1) nach einem der vorhergehenden Ansprüche, wobei das Verkleidungs-Element (5, 7) eine Beschichtung umfasst, insbesondere eine Anti-Reflexionsbeschichtung.

13. Laservorrichtung (1) nach einem der vorhergehenden Ansprüche, wobei das Element (3) aus laseraktivem Material auf der Seite, die dem Verkleidungs-Element (5, 7) gegenüberliegt, eine Beschichtung umfasst, insbesondere eine Beschichtung, welche die entsprechende Seite zumindest teilweise für das Laserlicht (Y) oder das Pumplicht (X) oder beide verspiegelt.

## Claims

1. A laser device (1), comprising
- an element (3) made of laser-active material, which emits laser light (Y) when excited by pump light (X), wherein the laser-active material is a glass; and wherein
- at least one cladding element (5, 7) is bonded to said element (3) made of laser-active material so as to allow for heat exchange by heat conduction between the cladding element (5, 7) and the element (3) made of laser-active material; and wherein
- the materials of said cladding element (5, 7) and of said element (3) made of laser-active material differ in that the cladding element (5, 7) exhibits an absorption coefficient for the pump light (X), which is lower than the corresponding absorption coefficient of the element (3) made of laser-active material; and wherein the laser device (1) is designed so that the pump light (X) is directed through the cladding element (5) and into the element (3) made of laser-active material, and/or so that the pump light (X) is directed through the element (3) made of laser-active material and into the cladding element (7);
**characterized in that**
- the cladding element (5, 7) comprises a phosphate crown glass, a phosphate dense crown glass, or a borosilicate crown glass.

2. The laser device (1) according to claim 1, wherein the difference in refractive indices of the materials of the cladding element (5, 7) and of the element (3) made of laser-active material is less than 0.1, preferably less than 0.05, and most preferably less than 0.002.

3. The laser device (1) according to any one of the preceding claims, wherein the cladding element (5, 7) has a thermal conductivity greater than that of air or of a protective gas.

4. The laser device (1) according to any one of the preceding claims, wherein the cladding element (5, 7) has a thermal conductivity greater than that of the element (3) made of laser-active material.

5. The laser device (1) according to any one of the preceding claims, wherein the element (3) made of laser-active material is made of phosphate glass.

6. The laser device (1) according to any one of the preceding claims, wherein the element (3) made of laser-active material is doped with ions of one or more of the elements erbium, ytterbium, neodymium, chromium, cerium, and/or titanium.

7. The laser device (1) according to any one of the preceding claims, wherein the cladding element (5, 7) is not doped with nor contains any laser light emitting ions or pump light absorbing ions.

8. The laser device (1) according to any one of the preceding claims, wherein the cladding element (5, 7) includes fluorine ions, wherein the cladding element (5, 7) in particular comprises a fluorine phosphate glass.

9. The laser device (1) according to any one of the preceding claims, wherein the cladding element (5, 7) exhibits a laser damage threshold higher than that of the element (3) made of laser-active material.

10. The laser device (1) according to any one of the preceding claims, wherein the difference between thermal expansion coefficients of the materials of the cladding element (5, 7) and of the element (3) made of laser-active material is less than 20 %, preferably less than 10 %.

11. The laser device (1) according to any one of the preceding claims, wherein the cladding element (5, 7) is bonded to the element (3) made of laser-active material by optical contact bonding or by optical bonding or by anodic bonding.

12. The laser device (1) according to any one of the preceding claims, wherein the cladding element (5, 7) comprises a coating, in particular an anti-reflection coating.

13. The laser device (1) according to any one of the preceding claims, wherein the element (3) made of laser-active material has a coating on the side facing away from the cladding element (5, 7), in particular a coating which renders reflective the respective side for the laser light (Y) or for the pump light (X) or for both, at least partly.

## Revendications

1. Dispositif laser (1) comprenant
- un élément (3) en matériau actif au laser qui émet de la lumière laser (Y) par excitation par une lumière de pompage (X), dans lequel le matériau actif au laser est un verre, et dans lequel
- au moins un élément de revêtement (5, 7) est relié à l'élément (3) en matériau actif au laser, de manière à permettre un échange de chaleur par conduction de chaleur entre l'élément de revêtement (5, 7) et l'élément (3) en matériau actif au laser, et dans lequel
- les matériaux de l'élément de revêtement (5, 7) et de l'élément (3) en matériau actif au laser se distinguent l'un de l'autre de manière telle que le coefficient d'absorption pour la lumière de pompage (X) soit plus faible pour l'élément de revêtement (5, 7) que le coefficient d'absorption correspondant de l'élément (3) en matériau actif au laser, et dans lequel le dispositif laser (1) est réalisé de telle manière que la lumière de pompage (X) soit guidée à travers l'élément de revêtement (5, 7) pour pénétrer dans l'élément (3) en matériau actif au laser, et/ou que la lumière de pompage (X) soit guidée à travers l'élément (3) en matériau actif au laser pour pénétrer dans l'élément de revêtement (5, 7), **caractérisé en ce que**
- l'élément de revêtement (5, 7) présente un verre phosphate à couronne, un vers phosphate lourd à couronne ou un verre borosilicate à couronne.

2. Dispositif laser (1) selon la revendication 1, dans lequel la différence des indices de réfraction des matériaux de l'élément de revêtement (5, 7) et de l'élément (3) en matériau actif au laser est inférieure à 0,1, de préférence inférieure à 0,05 et de manière particulièrement avantageuse inférieure à 0,002.

3. Dispositif laser (1) selon l'une des revendications précédentes, dans lequel l'élément de revêtement (5, 7) présente une conductivité thermique qui est supérieure à celle de l'air ou à celle d'un gaz de protection.

4. Dispositif laser (1) selon l'une des revendications précédentes, dans lequel l'élément de revêtement (5, 7) présente une conductivité thermique qui est supérieure à celle de l'élément (3) en matériau actif au laser.

5. Dispositif laser (1) selon l'une des revendications précédentes, dans lequel l'élément (3) en matériau actif au laser est constitué de verre phosphate.

6. Dispositif laser (1) selon l'une des revendications précédentes, dans lequel l'élément (3) en matériau actif au laser est dopé avec des ions d'un ou plusieurs des éléments comprenant l'erbium, l'ytterbium, le néodyme, le chrome, le cérium et/ou le titane.

7. Dispositif laser (1) selon l'une des revendications précédentes, dans lequel l'élément de revêtement (5, 7) n'est pas dopé avec des ions émettant de la lumière laser ni avec des ions absorbant la lumière de pompage ou ne contient pas ces ions.

8. Dispositif laser (1) selon l'une des revendications précédentes, dans lequel l'élément de revêtement (5, 7) comprend des ions de fluor, en particulier dans lequel l'élément de revêtement (5, 7) comprend un verre phosphate au fluor.

9. Dispositif laser (1) selon l'une des revendications précédentes, dans lequel l'élément de revêtement (5, 7) présente un seuil de destruction laser qui est supérieur à celui de l'élément (3) en matériau actif au laser.

10. Dispositif laser (1) selon l'une des revendications précédentes, dans lequel la différence des coefficients de dilatation thermique des matériaux de l'élément de revêtement (5, 7) et de l'élément (3) en matériau actif au laser est inférieure à 20 %, de préférence inférieure à 10 %.

11. Dispositif laser (1) selon l'une des revendications précédentes, dans lequel l'élément de revêtement (5, 7) est relié à l'élément (3) en matériau actif au laser, par jonction directe ou par soudage optique ou par soudage anodique.

12. Dispositif laser (1) selon l'une des revendications précédentes, dans lequel l'élément de revêtement (5, 7) comporte une couche, en particulier une couche antireflets.

13. Dispositif laser (1) selon l'une des revendications précédentes, dans lequel l'élément (3) en matériau actif au laser, sur la face située en vis-à-vis de l'élément de revêtement (5, 7), comporte une couche, en particulier une couche qui rend réfléchissante au moins en partie la face correspondante vis-à-vis de la lumière laser (Y) ou de la lumière de pompage (X).
